Europäisches Patentamt

**European Patent Office**

Office européen des brevets

(19)

(11) Veröffentlichungsnummer: **0 049 536**
**B1**

(12) ## EUROPÄISCHE PATENTSCHRIFT

(45) Veröffentlichungstag der Patentschrift:
27.06.84

(51) Int. Cl.³: **C 05 F 3/00**

(21) Anmeldenummer: **81108086.0**

(22) Anmeldetag: **08.10.81**

(54) Verfahren zur Herstellung von das Pflanzenwachstum und den Ernteertrag fördernden Mitteln beziehungsweise Böden.

(30) Priorität: **08.10.80 HU 244780**

(43) Veröffentlichungstag der Anmeldung:
**14.04.82 Patentblatt 82/15**

(45) Bekanntmachung des Hinweises auf die Patenterteilung:
**27.06.84 Patentblatt 84/26**

(84) Benannte Vertragsstaaten:
**AT BE CH DE FR GB IT LI LU NL SE**

(56) Entgegenhaltungen:
**FR - A - 565 198**
**FR - A - 829 750**
**FR - A - 1 525 262**
**FR - A - 2 228 346**
**FR - A - 2 391 976**
**FR - A - 2 398 110**
**NL - A - 2 180 555**
**NL - A - 7 900 069**

**CHEMICAL ABSTRACTS, Band 87, Nr. 2, Juli 1977, Seite 74, Zusammenfassung 7372c Columbus, Ohio, US L. TREZL et al. "Changes in the thermal behavior of wool due to pretreatments. Formation of heat resistant cross linkages"**
**P. SINGLETON & D. SAINSBURY: DICTIONARY OF MICROBIOLOGY Ed. J. Wiley & Sons, Chichester 1978**

(73) Patentinhaber: **MAGYAR TUDOMANYOS AKADEMIA KÖZPONTI HIVATALA, Münnich Ferenc utca 7, H-1051 Budapest (HU)**
Patentinhaber: **LENIN MEZÖGAZDASAGI TERMELÖSZÖVETKEZET, Malom utca 1, H-5431 Tiszaföldvár (HU)**

(72) Erfinder: **Rusznák, István, Dr., Arpádfejedelem u. 39, H-1023 Budapest (HU)**
Erfinder: **Trézl, Lajos, Dr., Asztalos János u. 6, H-1016 Budapest (HU)**
Erfinder: **Földesi, Dezsö, Dr., Rákoczi u. 13, H-2012 Budakalász-felsö (HU)**
Erfinder: **Szabó, Béla, Dr., Arval J. u. 23, H-5430 Tiszaföldvár (HU)**
Erfinder: **Bódi, Imre, Bajcsy-Zsilinszky u. 4, H-5430 Tiszaföldvár (HU)**
Erfinder: **Császár, Szilveszter, Mártirok u. 73, H-5430 Tiszaföldvár (HU)**
Erfinder: **Szopko, Mihály, Tarján telep 604/b, H-6700 Szeged (HU)**
Erfinder: **Gombár, Mihály, Mártirok u. 69, H-5430 Tiszaföldvár (HU)**
Erfinder: **Kovács, Gabriella, Dr., Besenyszög u. 20, H-1172 Budapest (HU)**
Erfinder: **Tyihák, Ernö, Dr., Zápor u. 59, H-1032 Budapest (HU)**

(74) Vertreter: **Beszédes, Stephan G. Dr., Münchener Strasse 80a Postfach 1168, D-8060 Dachau (DE)**
Selten 161-162
**CHEMICAL ABSTRACTS, Band 83, Nr. 3, 21. Juli 1975 Seite 89, Zusammenfassung 22919x Columbus, Ohio, US A.D. RUSSELL et al. "Bactericidal and bacteriostatic activity of glutaraldehyde and its interaction with lysine and proteins"**
**CHEMICAL ABSTRACTS, Band 85, Nr. 17, 25. Oktober 1976, Seite 171, Zusammenfassung 118182u Columbus, Ohio, US E. TYIHAK et al. "Antagonistic behavior of L-lysine and L-arginine with formaldehyde in the homogeneous and heterogeneous phase"**

Die Akte enthält technische Angaben, die nach dem Eingang der Anmeldung eingereicht wurden und die nicht in dieser Patentschrift enthalten sind.

**Beschreibung**

Die Erfindung betrifft ein neues Verfahren zur Herstellung von das Pflanzenwachstum und den Ernteertrag fördernden Mitteln beziehungsweise Böden aus Dünger, Jauche, organischen Abfallstoffen und/oder Böden mit hohem Lysingehalt durch Erhöhung des biologischen Wertes desselben beziehungsweise derselben.

Bisher wurden verschiedene Stoffe zur Regelung des Pflanzenwachstumes und auch zur Erhöhung des Ernteertrages in der Pflanzenzucht verwendet. Diese Stoffe stehen jedoch nicht in der gewünschten Menge zur Verfügung und ihre Herstellung ist mit hohem Aufwand verbunden, was wiederum ihre breite Anwendung beschränkt. Außerdem kann die breite Anwendung von synthetischen Pflanzenwuchsreglern zu unerwünschten Umweltschäden führen.

Ferner wurde bereits Formaldehyd zur Behandlung von Böden und Pflanzen, die stark mit pflanzenzerstörenden Mikroorganismen und Pilzen infiziert waren, eingesetzt (französische Patentschrift 565 198 [Verwendung von Formaldehyd beziehungsweise Formaldehydpolymeren zusammen mit Phenol als Pflanzenschutzmittel, wobei von der Verwendung von Formaldehyd allein als die Pflanzen beziehungsweise ihre Teile schädigend abgeraten wird]; Doran und Mitarbeiter: Mass. Agr. Exp. Sta. Ann. Rept. 1939, [1940], 23; Cook und Mitarbeiter: Virginia Truck Expt. Sta. Bulletin 104, [1940], 1663; Danies und Mitarbeiter: N. J. Agr. Exp. Sta. Circular No. 437 [1942] 8; Bewely: Chem. Ind. (London) 63, [1944], 237; Sewell: East Mailing Research Station, Report for 1977, [1978], 97 bis 99; Dictionary of Microbiology von PAUL SINGLETON und DIANA SAINSBURY, JOHN WILEY & SONS, Chichester, 1978, Seiten 161 bis 162). In diesen Beispielen diente die Formaldehydbehandlung immer der Vernichtung der Mikroorganismen und Pilze, die den Boden infizieren und das Pflanzenwachstum hindern. Nach den oben erwähnten Veröffentlichungen kehrte die Produktivität des Bodens nach einer Desinfektion mit Formaldehyd in ihren ursprünglichen Zustand (vor der Infektion) zurück und das Wachstum der in den behandelten Boden gesäten oder gepflanzten Pflanzen wurde mit demjenigen, welches vor dem Ausbrechen der Bodeninfektion beobachtet wurde, praktisch identisch. Aus dem genannten Schrifttum geht hervor, daß ähnliche Ergebnisse erreicht werden können, wenn der Boden mit Dampf oder fungiziden oder Mikroben tötenden (mikrobiziden) Wirkstoffen, zum Beispiel Trichlornitromethan [Chlorpikrin] oder Methyl-2-furoyl-N-2,6-(xylyl)-DL-alaninat [Furalaxyl], an Stelle mit Formaldehyd desinfiziert wird. Keine der erwähnten Schrifttumsstellen beschäftigt sich mit der Behandlung von Dünger, Jauche oder organischen Abfallstoffen und keine liefert Informationen darüber, wie sich die Wachstumsgeschwindigkeit verändert, wenn die Behandlung auf einem nicht infizierten Boden mit entsprechender Ergiebigkeit durchgeführt wird.

Ferner wurden gemäß der französischen Patentschrift 829 750 natürliche Dünger, wie Mist und Jauche, mit einem Bakterizid behandelt, um den in den Düngern enthaltenen ganzen Stickstoff zu bewahren. Als Bakterizid ist auch Formaldehyd erwähnt, in welchem Zusammenhang Seite 1, Zeile 25 bis 27 der genannten Druckschrift genannt sei. Gemäß dieser Stelle wird aber auch Kupfernitrat mit verwendet; auch wird fener Schwefelsäure in erheblicher Menge mit verwendet.

Weiterhin wurden gemäß der französischen Patentschrift 1 525 262 Phosphatdünger mit wohlriechenden antiseptischen Bakteriziden, wie Mischungen von Phenolen und Aldehyden, wie sie in ätherischen Ölen für die Parfumindustrie vorliegen, behandelt, um eine Tierstreu herzustellen, welche dann mit den tierischen Exkrementen in Berührung gebracht auf Felder gesprüht wurde.

Außerdem ist es aus der französischen Offenlegungsschrift 2 391 976 bekannt, Jauche mit Kombinationen von Formaldehyd mit Peroxoverbindungen zu behandeln, um eine Desodorierung der Jauche herbeizuführen. Dabei ist darauf hingewiesen, daß die Behandlung mit Formaldehyd allein zu keinem Erfolg führte.

Ferner ist in der französischen Offenlegungsschrift 2 228 346 die Behandlung von Jauchen mit Formaldehyd in Verbindung mit Natrium- oder Kaliumpyrosulfit zum Zwecke der Desodorierung der Jauchen durch Zerstörung der Übelkeit erregenden Substanzen derselben beschrieben. Dabei ist angegeben, daß die Behandlung mit Formaldehyd allein wegen seines reizenden Geruches weniger geeignet ist.

Weiterhin wurde beziehungsweise wurden nach der niederländischen Offenlegungsschrift 7 900 069 Mist beziehungsweise Abfallstoffe mit Formaldehyd, insbesondere 35%igen wäßrigen Formaldehydlösungen, behandelt, wobei davon die Rede ist, daß das Zuführen des Formaldehydes erst dann eingestellt wird, wenn kein auf eine weitere Reaktion hinweisendes Zeichen mehr bemerkt wird (das Schäumen beziehungsweise die Gas- und Wärmeentwicklung aufhört).

Außerdem ist in der französischen Offenlegungsschrift 2 398 110 die Zugabe von desodorierenden Bakteriziden zu organischen Abfällen am Ende ihrer zur Anreicherung an Aminosäuren, wie Lysin, erfolgenden anäroben Gärung, um sie für die Ernährung von Tieren als Futtermittelzusatz mit prophylaktisch medizinischer Wirkung geeignet zu machen, beschrieben.

Ferner ist aus der französischen Offenlegungsschrift 2 180 555 ein Verfahren zur Herstellung von Lysin mittels Züchtung von Mutanten von gramnegativen Mikroorganismen bekannt. Von einer Formaldehydbehandlung ist dagegen keine Rede.

Soweit in den obigen Druckschriften überhaupt eine Behandlung mit Aldehyden beziehungsweise speziell Formaldehyd erwähnt ist, werden diese beziehungsweise wird dieser in den französischen

Patentschriften 565 198, 829 750 und 1 525 262 und in den französischen Offenlegungsschriften 2 228 346 und 2 391 976 zusammen mit anderen Materialien, und zwar mit Kupfernitrat und Schwefelsäure, mit Phenolen, mit Pyrosulfiten beziehungsweise Peroxoverbindungen eingesetzt. In Gegenwart von solchen Materialien kann aber die Methylierung von Lysin entweder überhaupt nicht erfolgen oder wird stark in den Hintergrund gedrängt. Beim Zusatzstoff Phenol (französische Patentschriften 565 198 und 1 525 262) handelt es sich sogar um einen solchen, welcher auf dem Boden gar nicht aufgebracht werden kann.

Der Erfindung liegt die Aufgabe zugrunde, unter Behebung der Nachteile des Standes der Technik ein Verfahren zur Herstellung von das Pflanzenwachstum und den Ernteertrag fördernden Mitteln beziehungsweise Böden, durch welches in einfacher Weise und mit leicht zugänglichen und in großen Mengen zur Verfügung stehenden Materialien der biologische Wert von Dünger, Jauche, organischen Abfallstoffen und/oder Böden mit hohem Lysingehalt erhöht wird, zu schaffen.

Das Obige wurde überraschenderweise durch die Erfindung erreicht.

Frühere Untersuchungen an Tierorganismen haben gezeigt, daß N$^\epsilon$-methylierte Lysine einschließlich N$^\epsilon$-Trimethyl-L-lysin (TML) die Zellvermehrung sowohl bei gesunden Zellen als auch bei Tumorzellen bedeutend anregen (Szende und Mitarbeiter: Neoplasma 17, [1970], 433; Kopper und Mitarbeiter: Neoplasma 18, [1971], 251). Weitere Untersuchungen haben auch gezeigt, daß bestimmte thymusabhängige menschliche Lymphozyten bei einer einzigen Dosis von 5 µg/mg oder 25 µg/mg N$^\epsilon$-Trimethyl-L-lysin eine explosionsartige Umwandlung durchmachen (Stotz und Mitarbeiter: Exp. Pathol. [Jena] 9, [1974], 317). Bei der Untersuchung der Synthese von N$^\epsilon$-Trimethyl-L-lysin wurde festgestellt, daß L-Lysin, sei es in freiem Zustand oder in Peptidbindung, auf die Wirkung von Formaldehyd hin spontan methyliert wird und aus ihm Mono-, Di- und Trimethylderivate mit gleichzeitiger N$^\epsilon$-Formylierung gebildet werden (Tyihak und Mitarbeiter: Proc. Hung. Ann. Meet. Biochem., Miskolc [1975], Chem. Abstr. 85, [1976], 118, 182, 171; Trezl und Mitarbeiter: Proc. 5. Inter. Wool. Text. Res. Conf. Aachen [1975], Chem. Abstr. 87, [1977], Seite 74, 7 372c; Tyihak und Mitarbeiter: Pharmazie 35, [1980], 25). Diese spontane Reaktion, die weder einen chemischen noch einen biologischen Katalysator erfordert, kann in jedem System erfolgen, in dem freie und/oder gebundene L- beziehungsweise D-Lysine und Formaldehyd vorhanden sind. Ferner ist in Dictionary of Microbiology von Paul Singleton und Diana Sainsbury, John Wiley & Sons, Chichester, 1978, Seiten 161 bis 162 vom Verhalten des Formaldehydes als Alkylierungsmittel unter Substitution von Proteinen durch Hydroxymethylgruppen die Rede. Auch eine Reaktion von Glutaraldehyd mit Lysin und Proteinen wurde beschrieben (Russel und Mitarbeiter: Microbios 1974, 11 (44), 147—152, Chem. Abstr. 83 [1975], 89).

Die pflanzenbiologischen Wirkungen der methylierten Lysinderivate wurden bisher noch nicht untersucht.

Nun wurde überraschenderweise festgestellt, daß wenn Dünger, Jauche, organische Abfälle und/oder an Lysin reiche Böden, die mit Lysin und/oder einer oder mehreren Lysinquelle(n) und gegebenenfalls einer oder mehreren landwirtschaftlichen Chemikalie(n) ergänzt sind beziehungsweise werden, mit Formaldehyd und/oder einer Formaldehydquelle behandelt werden, der biologische Wert des behandelten Materials beträchtlich erhöht wird. Die Wachstumsgeschwindigkeit von Pflanzen, die auf Dünger, Jauche, organischen Abfällen oder lysinreichen Böden, die mit Formaldehyd und/oder einer Formaldehydquelle behandelt wurden, wachsen, ist nämlich wesentlich höher als die von Pflanzen, die unter gleichen Bedingungen auf dem gleichen Medium, der jedoch nicht mit Formaldehyd behandelt worden ist, wachsen, und der Ernteertrag ist im erstgenannten Fall das Mehrfache, wie das Doppelte oder Dreifache, desjenigen im letztgenannten Fall.

Gegenstand der Erfindung ist daher ein Verfahren zur Herstellung von das Pflanzenwachstum und den Ernteertrag fördernden Mitteln beziehungsweise Böden, welches dadurch gekennzeichnet ist, daß Dünger, ein oder mehrere organische Abfallstoff(e) und/oder Böden mit hohem Lysingehalt, die mit Lysin und/oder einer mehreren Lysinquelle(n) und gegebenenfalls einer oder mehreren landwirtschaftlichen Chemikalie(n) ergänzt sind beziehungsweise werden, mit Formaldehyd und/oder einer oder mehreren Formaldehydquelle(n) in einer 0,01 bis 100 Mol Formaldehyd je Mol freies und/oder gebundenes Lysin entsprechenden Menge behandelt wird beziehungsweise werden.

Durch das erfindungsgemäße Verfahren kann in der Pflanzenzucht bei verschiedenen Pflanzenkulturen ein besonders starkes Erhöhen des Ernteertrages erzielt werden.

Die bedeutende Zunahme der Wachstumsgeschwindigkeit der Pflanze und des Ernteertrages, die bei Durchführung des erfindungsgemäßen Verfahrens zu beobachten ist, kann der Tatsache zugeschrieben werden, daß das beziehungsweise die in freiem und/oder in gebundenem Zustand im Dünger, in der Jauche, in den organischen Abfallstoffen und in den lysinreichen Böden vorkommende(n) und ihnen zugesetzte(n) L- und/oder D-Lysin(e) mit Formaldehyd reagieren und dabei methylierte Lysinderivate, zum Beispiel N$^\epsilon$-Monomethyl-, N$^\epsilon$-Dimethyl- und N$^\epsilon$-Trimethylverbindungen, bilden, die wiederum das Zellenwachstum in den Pflanzenorganismen beschleunigen. Auch nach Kenntnis der oben abgehandelten Schrifttumsstellen war dies nicht vorauszusehen. Obwohl nämlich aus diesen bekannt ist, daß N$^\epsilon$-Trimethyl-L-lysin die Zellenvermehrung in Tierorganismen fördert, sind der Aufbau der Tier- und Planzenorganismen und der biologische Mechanismus ihres Wachstumes so unterschiedlich, daß aus den bei Tierversuchen beobachteten Ergebnissen keine pflanzenbiologischen Schlußfolgerungen zu ziehen sind. Weiterhin enthalten die erfindungsgemäß zu behandelnden Mate-

3

rialien, das heißt Dünger, Jauche, organische Abfallstoffe und Böden, außer dem Lysin zahlreiche andere Bestandteile, die ebenfalls mit Formaldehyd reagieren, die biologischen Wirkungen dieser Reaktionsprodukte sind jedoch unbekannt. Dabei ist es sehr überraschend, daß die sich ergebende Wirkung des erfindungsgemäßen Verfahrens eine Zunahme des Pflanzenwachstumes und des Ernteertrages ist, da auch erwartet werden konnte, daß Formaldehyd andere Reaktionsprodukte bildet, die das Pflanzenwachstum hindern und dadurch die anregende beziehungsweise stimulierende Wirkung der methylierten Lysinderivate unterdrücken oder ausgleichen. Die mit dem erfindungsgemäßen Verfahren erreichten Ergebnisse konnten selbst auf Grund der Schrifttumsstellen, die sich mit der Bodenbehandlung mit Formaldehyd beschäftigen, nicht vorausgesehen werden, da nach diesen Schrifttumsstellen die Ergiebigkeit des Bodens nur auf den ursprünglichen Wert ohne jegliche zusätzliche Zunahme derselben über diesen hinaus wiederhergestellt werden konnte; außerdem können die anderen bodendesinfizierenden Wirkstoffe, welche die gleiche Wirkung wie Formaldehyd haben sollen (heißer Dampf beziehungsweise fungizide beziehungsweise bakterizide Wirkstoffe) [vergleiche die französischen Patentschriften 829 750 und 1 525 262] nicht als in Bezug auf Lysin methylierende Wirkstoffe eingesetzt werden.

Auch ist es gegenüber den Tatsachen, daß nach dem Stand der Technik zusammen mit den Aldehyden beziehungsweise Formaldehyd solche Materialien, welche die Methylierung von Lysin verhindern oder stark in den Hintergrund drängen (französische Patentschriften 829 750 und 1 525 262 und französische Offenlegungsschriften 2 228 346 und 2 391 976) einzusetzen sind und/oder für die Behandlung mit dem Formaldehyd außerordentlich scharfe, möglichst zur völligen Vernichtung der Bakterien beziehungsweise Beseitigung des Geruches führende Bedingungen, welche die methylierten Lysinderivate zerstören und damit keine Erhöhung des Pflanzenwachstumes und keine Förderung des Ernteertrages ermöglichen, anzuwenden sind (niederländische Offenlegungsschrift 7 900 069, französische Patentschrift 829 750 und französische Offenlegungsschriften 2 228 346 und 2 391 976), wobei wie bereits erwähnt in den französischen Offenlegungsschriften 2 228 346 und 2 391 976 eigens betont wird, daß der Formaldehyd allein die gewünschte desodorierende Wirkung nicht herbeizuführen vermag, und Formaldhyd als mit anderen bakteriziden Wirkstoffen, welche mit Lysin nicht zu reagieren vermögen, als gleichwertig hingestellt wurde (französische Patentschriften 829 750 und 1 525 262) ist die erfindungsgemäße Feststellung, daß die Behandlung des Düngers, der Jauche, des beziehungsweise der organischen Abfallstoffe[s] und/oder des Bodens mit hohem Lysingehalt unter solchen Bedingungen durchgeführt werden muß, welche die Methylierung von Lysin fördern und daß überhaupt Lysin mit einem Mindestschwellenwert im Dünger, in der Jauche, im beziehungsweise in den organischen Abfallstoff(en) und/oder im Boden vorhanden sein muß, damit eine Erhöhung des Pflanzenwachstumes und eine Förderung des Ernteertrages durch die Behandlung mit dem Formaldehyd mittels seiner Reaktion und dem Lysin erzielt wird, wobei die Formaldehydmenge nach dem Lysingehalt eingestellt zugesetzt werden muß, überraschend. Dies um so mehr als nach dem Stand der Technik mit dem Formaldehyd die Bakterien zu vernichten und damit auch die zur Bildung von Lysin führenden bakteriellen Vorgänge zu verhindern waren, so daß durch den Formaldehyd auch nicht der eine Bestandteil, welcher zur zur Erhöhung des Pflanzenwachstumes und Förderung des Ernteertrages notwendigen Reaktion erforderlich ist, nämlich das Lysin, entstehen konnte, also nicht einmal in der dazu erforderlichen Mindestgrundstoffmenge. Hinzu kommt noch, daß im Stand der Technik weder der Lysingehalt des Düngers, der Jauche, der organischen Abfallstoffe beziehungsweise des Bodens noch dessen Bedeutung erwähnt ist, keine Rede von einem wirksamen Mindestschwellenwert des Lysines ist und nichts über die Abhängigkeit der zu verwendenden Formaldehydmenge vom Lysingehalt gesagt wird, geschweige denn von einem Lysinzusatz die Rede ist.

Vorzugsweise wird beziehungsweise werden der Formaldehyd und/oder die Formaldehydquelle(n) in 0,1 bis 20 Mol Formaldehyd je Mol freies und/oder gebundenes Lysin entsprechenden Mengen verwendet.

Der Ausdruck »Lysin« umfaßt die D-, L- und DL-Formen von Lysin. Die Ausdrücke »Lysinquelle« oder »gebundenes Lysin« beziehen sich auf Lysinsalze und -komplexe und lysinhaltige Oligopeptide, Polypeptide, Proteine und Salze und deren Komplexe.

Der Ausdruck »Formaldehydquelle« bezieht sich auf jeden Stoff, der unter den Bedingungen des erfindungsgemäßen Verfahrens Formaldehyd freizugeben vermag. Vorteilhaft kann beziehungsweise können als Formaldehydquelle(n) Paraformaldehyd, Urotropin und/oder 1 oder mehr 1 oder mehr N-Metylolgruppe(n) aufweisende Verbindung(en), wie Methylolharnstoff und/oder Methylolmelamin, verwendet werden.

Erfindungsgemäß umfaßt die Behandlung des Bodens auch die von Samen beziehungsweise Knollen, welche nach ihrer Behandlung mit dem Formaldehyd und/oder der beziehungsweise den Formaldehydquelle(n) in den Boden eingebracht werden.

Vorzugsweise wird die Behandlung bei Temperaturen von 0 bis 100°C, insbesondere 15 bis 100°C, durchgeführt.

Es ist auch bevorzugt, die Behandlung bei pH-Werten von 1 bis 13, insbesondere 6 bis 10, durchzuführen.

Der Dünger, die Jauche und der beziehungsweise die organische(n) Abfallstoff(e) kann beziehungsweise können getrennt oder im Gemisch miteinander mit dem Formaldehyd und/oder der beziehungsweise den Formaldehydquelle(n) behandelt werden.

Nach einer zweckmäßigen Ausführungsform des erfindungsgemäßen Verfahrens wird die Behandlung mit dem Formaldehyd und/oder der beziehungsweise den Formaldehydquelle(n) nach dem Einbeziehungsweise Aufbringen des Düngers, der Jauche und/oder des beziehungsweise der organischen Abfallstoffe[s] in oder auf den Boden, zum Beispiel durch Pflügen, durchgeführt.

Nach einer anderen zweckmäßigen Ausführungsform des erfindungsgemäßen Verfahrens wird zunächst der Boden mit dem Formaldehyd und/oder der beziehungsweise den Formaldehydquelle(n) behandelt und erst danach der Dünger, die Jauche und/oder der beziehungsweise die organische[n] Abfallstoff(e) in oder auf den so behandelten Boden ein- beziehungsweise aufgebracht.

Der Ausdruck »Boden mit hohem Lysingehalt« bedeutet Böden, die mindestens 0,001 Gew.-% Lysin entweder in freiem und/oder in gebundenem Zustand enthalten. Ein Teil dieser Menge kann ursprünglich im Dünger, in der Jauche, im beziehungsweise in den Abfallstoff(en) und/oder im Boden vorhanden sein und zumindest zum Teil diesem, dieser beziehungsweise diesen entweder vor, gleichzeitig mit und/oder nach der Behandlung mit dem Formaldehyd und/oder der beziehungsweise den Formaldehydquelle(n) zugesetzt worden sein beziehungsweise werden. Alle diese Varianten sind vom Ausdruck »Boden mit hohem Lysingehalt« umfaßt. Entsprechend umfaßt der Ausdruck »Mol freies und/oder gebundenes Lysin« bei den obigen Mengenangaben sowohl das ursprünglich in den genannten Materialien enthaltene also auch ihnen vor der Behandlung mit dem Formaldehyd und/oder der beziehungsweise den Formaldehydquelle(n) zugesetzte freie und/oder gebundene Lysin und/oder das diesen Materialien gleichzeitig mit und/oder nach dieser Behandlung zuzusetzende freie und/oder gebundene Lysin.

So wird beziehungsweise werden nach einer zweckmäßigen Ausführungsform des erfindungsgemäßen Verfahrens der Dünger, die Jauche, der beziehungsweise die organische[n] Abfallstoff(e) und/oder der Boden gleichzeitig beziehungsweise auch gleichzeitig mit der Behandlung mit dem Formaldehyd und/oder der beziehungsweise den Formaldehydquelle(n) mit Lysin und/oder einer oder mehreren Lysinquelle(n) und gegebenenfalls einer oder mehreren landwirtschaftlichen Chemikalie(n) ergänzt. Dabei kann vorteilhaft der Dünger, die Jauche, der beziehungsweise die organische[n] Abfallstoff(e) und/oder der Boden mit dem Formaldehyd und/oder der beziehungsweise den Formaldehydquelle(n) in Mischung mit dem Lysin und/oder der beziehungsweise den Lysinquelle(n) und gegebenenfalls der beziehungsweise den landwirtschaftlichen Chemikalie(n) behandelt werden.

Nach einer anderen zweckmäßigen Ausführungsform des erfindungsgemäßen Verfahrens wird beziehungsweise werden der Dünger, die Jauche, der beziehungsweise die organische[n] Abfallstoff(e) und/oder der Boden nach beziehungsweise auch nach der Behandlung mit dem Formaldehyd und/oder der beziehungsweise den Formaldehydquelle(n) mit Lysin und/oder einer oder mehreren Lysinquelle(n) und gegebenenfalls einer oder mehreren landwirtschaftlichen Chemikalie(n) ergänzt.

Nach einer speziellen vorteilhaften Ausführungsform des erfindungsgemäßen Verfahrens wird beziehungsweise werden als landwirtschaftliche Chemikalie(n) ein oder mehrere Düngemittel, Spurenelement(e), Erdmetall(e), Erdmetalloxyd(e), Erdmetallcarbonat(e) und/oder Pflanzenschutzwirkstoff(e) verwendet. Diese Materialien können im Gegensatz zu den nach dem Stand der Technik zusammen mit dem Formaldehyd verwendeten Materialien, welche die Reaktion von Lysin und Formaldehyd verhindern oder in den Hintergrund drängen, diese Reaktion beschleunigen und außerdem sind sie wertvolle und manchmal sogar unentbehrliche Bestandteile in Bezug auf die Pflanzenentwicklung und das Pflanzenwachstum. So kann die erfindungsgemäße Behandlung auch auf vorbehandelten oder mit landwirtschaftlichen Chemikalien, wie Düngemitteln, ergänzten Böden erfolgen. Ähnlich können Dünger, Jauche beziehungsweise organische Abfallstoffe vor oder nach der Behandlung mit dem Formaldehyd und/oder der beziehungsweise den Formaldehydquelle(n) mit landwirtschaftlichen Chemikalien vermischt worden sein beziehungsweise werden, um Bodenzusätze mit komplexer Wirkung zu erzielen, die den jeweiligen Anforderungen am besten genügen. Wenn es die Verträglichkeitsbedingungen ermöglichen, können auch weitere Zusätze, wie eine oder mehrere landwirtschaftliche Chemikalie(n), beispielsweise Spurenelement(e), zum Material, welches mit dem Formaldehyd und/oder der beziehungsweise den Formaldehydquelle(n) und dem Lysin und/oder der beziehungsweise den Lysinquelle(n) behandelt werden soll, zugegeben worden sein.

Als organische Abfallstoffe werden bevorzugt Stoffe pflanzlichen Ursprunges mit hohem Peptidoder Proteingehalt, wie Kornhalme, Sonnenblumenkuchen und/oder Zuckerrübenblätter, verwendet.

Die erfindungsgemäß behandelten Dünger, Jauche, organischen Abfallstoffe und/oder Böden können eine entsprechende Zeit stehengelassen werden, wodurch der überschüssige Formaldehyd ausgeschieden werden kann, worauf erst das Säen und Pflanzen erfolgen.

Die wichtigsten Vorteile des erfindungsgemäßen Verfahrens sind wie folgt:

a) Durch das erfindungsgemäße Verfahren wird eine bedeutende Erhöhung des Pflanzenwachstumes und des Ernteertrages erzielt.

b) Das erfindungsgemäße Verfahren erfordert nur Materialien, welche ohne Beschränkung zur Verfügung stehen, wie Dünger, Jauche und/oder organische Abfallstoffe.

c) Bisher nicht oder nicht ausreichend genutzte organische Abfallstoffe können zu wertvollen Nährstoffen für Pflanzen umgewandelt werden.

5

d)  Das erfindungsgemäße Verfahren führt zur Bildung von das Pflanzenwachstum fördernden natürlichen Stoffen, so daß es nicht zu unerwünschten Umweltschäden kommt.

Die Erfindung wird an Hand der folgenden Beispiele näher erläutert. Die Merkmale der in deren Versuchen verwendeten Böden sind in der folgenden Tabelle 1 zusammengestellt.

Tabelle 1

| Merkmale | Boden Nr. 1 | Nr. 2 |
|---|---|---|
| pH-Wert (in Wasser) | 7,9 | 7,9 |
| $CaCO_3$-Gehalt in Gew.-% | 16 | 16,2 |
| Undurchlässigkeitsindex (nach Arany) | 37 | 43 |
| Gesamter Salzgehalt in Gew.-% | 0,06 | 0,02 |
| Humusgehalt in Gew.-% | 2,25 | 2,62 |
| Absorbierbares $P_2O_5$ in mg/100 g | 12,1 | 11,9 |
| Absorbierbares $K_2O$ in mg/100 g | 17,1 | 13,2 |

Beispiel 1

Die Versuche wurden auf Böden Nr. 1 durchgeführt. Dem Boden wurden 6 Monate vor der Behandlung 0,1 Vol.-% einer Nährlösung, die 9 Gew.-% Stickstoff, 9 Gew.-% Phosphorpentoxyd, 7 Gew.-% Kaliumoxyd, Vitamin $B_1$ und Spurenelemente (Chelate von Fe, Mn, B, Cu, Zn, Co und Mo) enthielt, zugesetzt.

Die bei den Pflanzenzuchtversuchen angewandten Bodenproben wurden wie folgt behandelt:

a)  Es wurden 3 cm³ einer 35 bis 40%igen wäßrigen Formaldehydlösung, die mit Wasser auf das 6- bis 10fache je nach dem Feuchtigkeitsgehalt des Bodens verdünnt wurde, mit 1 l Boden vermischt. Das Gemisch wurde 8 bis 10 Tage in einer Plastiktüte gehalten und dann 5 Wochen belüftet. Diese Behandlung wird im folgenden als »Behandlung mit Formaldehyd« bezeichnet.

b)  Es wurde 0,3 g L-Lysin mit 1 l Boden vermischt. Diese Behandlung wird im folgenden als »Behandlung mit L-Lysin« bezeichnet.

c)  Es wurde 0,3 g L-Lysin mit 1 l Boden vermischt und der Boden wird wie unter dem obigen Punkt a) beschrieben behandelt. Diese kombinierte Behandlung wird im folgenden als »Behandlung mit Formaldehyd + + L-Lysin« bezeichnet.

Unbehandelter Boden diente als Blindversuch beziehungsweise Kontrollversuch.

Je 10 Gefäße mit einem Volumen von 200 cm³ wurden mit unbehandelten oder behandelten Bodenproben gefüllt und die Gefäße wurden ungleichmäßig verteilt in den Acker versenkt. 2 bis 4 Sämlinge von Sedum reflexum wurden in jedes der Gefäße gepflanzt. Das Wachstum der Sämlinge wurde nach 1,5 Monaten ausgewertet. Die beobachteten Ergebnisse sind in der folgenden Tabelle 2 zusammengestellt.

Tabelle 2

| Behandlung | Wachstum des oberirdischen Teiles der Pflanzen in Gew.-%, bezogen auf das Gewicht der Sämlinge | Wschstumserhöhung in Gew.-%, bezogen auf den Blindversuch |
|---|---|---|
| Behandlung mit Formaldehyd [nicht erfindungsgemäß] | 247 | 70,3 |
| Behandlung mit Formaldehyd +L-Lysin [erfindungsgemäß] | 292 | 101,3 |
| Behandlung mit L-Lysin [nicht erfindungsgemäß] | 148 | 2,1 |
| Unbehandelt [Blindversuch] | 145 | 0 |

Beispiel 2

Die im Beispiel 1 beschriebenen Versuche wurden mit Pflanzen von Sedum album durchgeführt. Die Ergebnisse sind in der folgenden Tabelle 3 zusammengestellt.

Tabelle 3

| Behandlung | Wachstum des oberirdischen Teiles der Pflanzen in Gew.-%, bezogen auf das Gewicht der Sämlinge | Wachstumserhöhung in Gew.-%, bezogen auf den Blindversuch |
|---|---|---|
| Behandlung mit Formaldehyd [nicht erfindungsgemäß] | 105 | 46 |
| Behandlung mit Formaldehyd + L-Lysin [erfindungsgemäß] | 145 | 101 |
| Behandlung mit —Lysin [nicht erfindungsgemäß] | 81 | 13 |
| Unbehandelt [Blindversuch] | 72 | 0 |

Beispiel 3

Die im Beispiel 2 beschriebenen Versuche wurden mit Proben vom Boden Nr. 2, die nicht mit einer Nährlösung behandelt wurden, durchgeführt. Die Ergebnisse sind in der folgenden Tabelle 4 zusammengestellt.

Tabelle 4

| Behandlung | Frischgewicht ohne Wurzeln in mg | Wachstumserhöhung in Gew.-%, bezogen auf den Blindversuch |
|---|---|---|
| Behandlung mit Formaldehyd [nicht erfindungsgemäß] | 2270 | 57 |
| Behandlung mit Formaldehyd + L-Lysin [erfindungsgemäß] | 2840 | 96 |
| Behandlung mit L-Lysin [nicht erfindungsgemäß] | 1360 | — 6 |
| Unbehandelt [Blindversuch] | 1450 | 0 |

Aus den obigen Tabellen 2 bis 4 geht eindeutig hervor, daß sich das Pflanzenwachstum bei der Behandlung des Bodens mit L-Lysin praktisch nicht änderte. Eine mittlere Wachtumserhöhung könnte bei der Behandlung des Bodens mit Formaldehyd beobachtet werden, was darauf hinweist, daß der Boden etwas Lysin enthielt. Eine starke Wachstumserhöhung ($SD_{5\%}$ = 108,8, $SD_{1\%}$ = 32,1) war bei der kombinierten Behandlung mit Formaldehyd und L-Lysin [erfindungsgemäßes Verfahren], das heißt wenn mit L-Lysin angereicherter Boden verwendet wurde, zu verzeichnen. Durch das erfindungsgemäße Verfahren wurde also ein überlegenes Pflanzenwachstum erzielt.

Beispiel 4

Die Versuche wurden mit Proben vom Boden Nr. 1 durchgeführt. Der Boden ist $1/2$ Jahr vor dem Beginn der Versuche mit 0,1 Vol.-% einer Nährlösung der im Beispiel 1 angegebenen Zusammensetzung behandelt worden. Die Bodenproben wurden wie im Beispiel 1 beschrieben behandelt, jedoch mit dem Unterschied, daß statt des 0,3 g L-Lysin bei den betreffenden Behandlungen 1 g pulveriges Pepton (Witte) mit 1 l Boden vermischt wurde [Behandlung mit Pepton (L-Lysinquelle) beziehungsweise Behandlung mit Formaldehyd + +Pepton (L-Lysinquelle)].

Je 10 Gefäße mit einem Volumen von 2 l wurden mit unbehandelten oder behandelten Bodenproben gefüllt und die Gefäße wurden ungleichmäßig verteilt in den Acker versenkt. In jedes der Gefäße wurden 20 Gerstenkörner (Hordeum sativum) gesät. Das Wachstum der Pflanzen wurde 1,5 Monate nach dem Säen ausgewertet. Die Ergebnisse sind in der folgenden Tabelle 5 zusammengestellt.

Tabelle 5

| Behandlung | Frischgewicht ohne Wurzeln in mg | Wachstumserhöhung in Gew.-%, bezogen auf den Blindversuch |
|---|---|---|
| Behandlung mit Formaldehyd [nicht erfindungsgemäß] | 178 | 51 |
| Behandlung mit Formaldehyd + Pepton (L-Lysinquelle) [erfindungsgemäß] | 282 | 139 |
| Behandlung Pepton (L-Lysinquelle) [nicht erfindungsgemäß] | 170 | 44 |
| Unbehandelt [Blindversuch] | 118 | 0 |

Aus der obigen Tabelle 5 geht hervor, daß durch das erfindungsgemäße Verfahren eine starke Erhöhung des Pflanzenwachstums ($SD_{5\%}$ = 8,2) auch erreicht werden kann, wenn eine Lysinquelle, das heißt in einer Peptidkette gebundenes L-Lysin enthaltendes Pepton, statt des freien L-Lysines eingesetzt wird.

## Patentansprüche

1. Verfahren zur Herstellung von das Pflanzenwachstum und den Ernteertrag fördernden Mitteln beziehungsweise Böden, dadurch gekennzeichnet, daß man Dünger, Jauche, einen oder mehrere organische Abfallstoff(e) und/oder Böden mit hohem Lysingehalt, die mit Lysin und/oder einer oder mehreren Lysinquelle(n) und gegebenenfalls einer oder mehreren landwirtschaftlichen Chemikalie(n) ergänzt sind beziehungsweise werden, mit Formaldehyd und/oder einer oder mehreren Formaldehydquelle(n) in einer 0,1 bis 100 Mol Formaldehyd je Mol freies und/oder gebundenes Lysin entsprechenden Menge behandelt.

2. Verfahren nach Anspruch 1, dadurch gekennzeichnet, daß man als Formaldehydquelle(n) Paraformaldehyd, Urotropin und/oder eine oder mehrere N-Methylolgruppe(n) aufweisende Verbindung(en) verwendet.

3. Verfahren nach Anspruch 1 oder 2, dadurch gekennzeichnet, daß man die Behandlung bei Temperaturen von 0 bis 100° C durchgeführt.

4. Verfahren nach Anspruch 1 bis 3, dadurch gekennzeichnet, daß man die Behandlung bei Temperaturen von 15 bis 100° C durchführt.

5. Verfahren nach Anspruch 1 bis 4, dadurch gekennzeichnet, daß man die Behandlung bei pH-Werten von 1 bis 13 durchführt.

6. Verfahren nach Anspruch 1 bis 5, dadurch gekennzeichnet, daß man die Behandlung bei pH-Werten von 6 bis 10 durchführt.

7. Verfahren nach Anspruch 1 bis 6, dadurch gekennzeichnet, daß man die Behandlung mit dem Formaldehyd und/oder der beziehungsweise den Formaldehydquelle(n) nach dem Ein- beziehungsweise Aufbringen des Düngers, der Jauche und/oder des beziehungsweise der organischen Abfallstoffe[s] in oder auf den Boden durchführt.

8. Verfahren nach Anspruch 1 bis 6, dadurch gekennzeichnet, daß man zunächst den Boden mit dem Formaldehyd und/oder der beziehungsweise den Formaldehydquelle(n) behandelt und erst danach den Dünger, die Jauche und/oder den beziehungsweise die organischen Abfallstoff(e) in oder auf den so behandelten Boden ein- beziehungsweise aufbringt.

9. Verfahren nach Anspruch 1 bis 8, dadurch gekennzeichnet, daß man den Dünger, die Jauche, den beziehungsweise die organischen Abfallstoff(e) und/oder den Boden gleichzeitig beziehungsweise auch gleichzeitig mit der Behandlung mit dem Formaldehyd und/oder der beziehungsweise den Formaldehydquelle(n) mit Lysin und/oder einer oder mehreren Lysinquelle(n) und gegebenenfalls einer oder mehreren landwirtschaftlichen Chemikalie(n) ergänzt.

10. Verfahren nach Anspruch 1 bis 9, dadurch gekennzeichnet, daß man den Dünger, die Jauche, den beziehungsweise die organischen Abfallstoff(e) und/oder den Boden mit dem Formaldehyd und/oder der beziehungsweise den Formaldehydquelle(n) in Mischung mit dem Lysin und/oder der beziehungsweise den Lysinquelle(n) und gegebenenfalls der beziehungsweise den landwirtschaftlichen Chemikalie(n) behandelt.

11. Verfahren nach Anspruch 1 bis 10, dadurch gekennzeichnet, daß man den Dünger, die Jauche, den beziehungsweise die organischen Abfallstoff(e) und/oder den Boden nach beziehungsweise auch nach der Behandlung mit dem Formaldehyd und/oder der beziehungsweise den Formaldehydquelle(n) mit Lysin und/oder einer oder mehreren Lysinquelle(n) und gegebenenfalls einer oder mehreren landwirtschaftlichen Chemikalie(n) ergänzt.

12. Verfahren nach Anspruch 1 bis 11, dadurch gekennzeichnet, daß man als landwirtschaftliche Chemikalie(n) 1 oder mehr Düngemittel, Spurenelement(e), Erdmetall(e), Erdmetalloxyd(e), Erdmetallcarbonat(e) und/oder Pflanzenschutzwirkstoff(e) verwendet.

## Claims

1. A process for preparing agents promoting the plant growth and the havest yield, characterized in that one treats manure, dung water, one or several organic waste material(s) and/or soil(s) having a high content of lysine which have been or are completed with lysine and/or one or several lysine source(s) and optionally one or several agricultural chemical(s) with formaldehyde and/or several formaldehyde source(s) in an amount corresponding to 0.1 to 100 mole of formaldehyde per mole of free and/or bound lysine.

2. A process according to claim 1, characterized in that one uses as [a] formaldehyde source(s) paraformaldehyde, urotropin and/or one or several compounds(s) containing N-methylol group(s).

3. A process according to claim 1 or 2, characterized in that one carries out the treatment at temperatures of from 0 to 100°C.

4. A process according to claims 1 to 3, characterized in that one carries out the treatment at temperatures of from 15 to 100°C.

5. A process according to claims 1 to 4, characterized in that one carries out the treatment at pH-values of from 1 to 13.

6. A process according to claims 1 to 5, characterized in that one carries out the treatment at pH-values of from 6 to 10.

7. A process according to claims 1 to 6, characterised in that one carries out the treatment with the formaldehyde and/or the formaldehyde source(s), respectively after incorporating or applying the manure, the dung water and/or the organic waste material(s), respectively, into or to the soil.

8. A process according to claims 1 to 6, characterized in that first one treats the soil with the formaldehyde and/or the formaldehyde source(s) and only thereafter introduces or applies, respectively the manure, the dung water and/or the organic waste material(s) into or to the thus treated soil.

9. A process according to claims 1 to 8, characterised in that one completes the manure, the dung water, the organic waste material(s) and/or the soil with lysine and/or one or several lysine source(s) and optionally one or several agricultural chemical(s) simultaneously or also simultaneously, respectively, with the treatment with the formaldehyde and/or the formaldehyde source(s).

10. A process according to claims 1 to 9, characterized in that one treats the manure, the dung water, the organic waste material(s) and/or the soil with the formaldehyde and/or the formaldehyde source(s) in mixture with the lysine and/or the lysine source(s) and optionally the agricultural chemical(s).

11. A process according to claims 1 to 10, characterized in that one completes the manure, the dung water, the organic waste material(s) and/or the soil with lysine and/or one or several lysine source(s) and optionally one or several agricultural chemical(s) after or also after, respectively, the treatment with the formaldehyde and/or the formaldehyde source(s).

12. A process according to claim 1 to 11, characterized in that one uses as agricultural chemical(s) one or more fertilizer(s), trace element(s), earth metal(s), alkaline-earth metal oxide(s), alkaline-earth carbonate(s) and/or plant protecting active principle(s).

## Revendications

1. Procédé de préparation d'agents ou de sols favorisant la croissance des plantes et le rendement des récoltes, caractérisé par le fait que l'on traite par le formaldéhyde et/ou par une ou plusieurs sources de formaldéhyde des engrais, du purin, un ou plusieurs déchets organiques et/ou des sols à haute teneur en lysine qui ont été complétés ou que l'on complète par de la lysine et/ou une ou plusieurs sources de lysine et éventuellement un ou plusieurs agents chimiques agricoles, en quantité correspondant à 0,1 à 100 moles de formaldéhyde par mole de lysine libre et/ou combinée.

2. Procédé selon la revendication 1, caractérisé par le fait que comme source(s) de formaldéhyde, on utilise le paraformaldéhyde, l'urotropine et/ou un ou des composés contenant un ou des groupes N-méthylol.

3. Procédé selon l'une des revendications 1 et 2, caractérisé par le fait que l'on effectue le traitement à des températures de 0 à 100°C.

4. Procédé selon l'une des revendications 1 à 3, caractérisé par le fait que l'on conduit le traitement à des températures de 15 à 100°C.

5. Procédé selon l'une des revendications 1 à 4, caractérisé par le fait que l'on conduit le traitement à des pH de 1 à 13.

6. Procédé selon l'une des revendications 1 à 5, caractérisé par le fait que l'on conduit le traitement à des pH de 6 à 10.

7. Procédé selon l'une des revendications 1 à 6, caractérisé par le fait que l'on conduit le traitement par le formaldéhyde et/ou par la ou les sources de formaldéhyde après avoir introduit ou appliqué l'engrais, le purin et/ou le ou les déchets organiques dans ou sur le sol.

8. Procédé selon l'une des revendications 1 à 6, caractérisé par le fait que l'on traite d'abord le sol par le formaldéhyde et/ou par la ou les sources de formaldéhyde et qu'ensuite seulement, on applique dans ou sur le sol ainsi traité l'engrais, le purin et/ou les déchets organiques.

9. Procédé selon l'une des revendications 1 à 8, caractérisé par le fait que l'on complète l'engrais, le purin, le ou les déchets organiques et/ou le sol par de la lysine et/ou une ou plusieurs sources de lysine et éventuellement un ou plusieurs agents chimiques agricoles, en même temps, ou aussi en même temps, que l'on effectue le traitement par le formaldéhyde et/ou la ou les sources de formaldéhyde.

10. Procédé selon l'une des revendications 1 à 9, caractérisé par le fait que l'on traite l'engrais, le purin, le ou les déchets organiques et/ou le sol par le formaldéhyde et/ou par la ou les sources de formaldéhyde en mélange avec la lysine et/ou la ou les sources de lysine et éventuellement le ou les agents chimiques agricoles.

11. Procédé selon l'une des revendications 1 à 10, caractérisé par le fait que l'on complète l'engrais, le purin, le ou les déchets organiques et/ou le sol, après, ou aussi après le traitement par le formaldéhyde et/ou la ou les sources de formaldéhyde, par de la lysine et/ou une ou plusieurs sources de lysine et éventuellement un ou plusieurs agents chimiques agricoles.

12. Procédé selon l'une des revendications 1 à 11, caractérisé par le fait que comme agents chimiques agricoles, on utilise un ou plusieurs engrais, oligoéléments, métaux alcalino-terreux, oxydes alcalino-terreux, carbonates alcalino-terreux et/ou substances actives de protection des plantes.